Europäisches Patentamt

European Patent Office

Office européen des brevets

(19)

(11) **EP 0 697 762 A1**

(12) **EUROPÄISCHE PATENTANMELDUNG**

(43) Veröffentlichungstag:
21.02.1996 Patentblatt 1996/08

(51) Int. Cl.$^6$: **H02K 37/12**, H02K 37/16

(21) Anmeldenummer: 95111368.7

(22) Anmeldetag: 20.07.1995

(84) Benannte Vertragsstaaten:
CH DE ES FR GB IT LI SE

(30) Priorität: 18.08.1994 DE 4429259

(71) Anmelder: **Moto Meter GmbH**
D-71229 Leonberg (DE)

(72) Erfinder:
• **Mueller-Sybrichs, Ralf, Dipl.-Ing.(FH)**
D-71254 Ditzingen (DE)
• **Herzog, Bernhard, Dipl.-Ing.**
D-70619 Stuttgart (DE)

(54) **Schrittmotor mit vorwiegend axialer Rotormagnetisierung**

(57) Erfindungsgemäß wird ein zweiphasiger Permanentmagnet-Schrittmotor vorgeschlagen, bei dem die Magnetisierung des Rotors vorwiegend parallel zur Rotorachse erfolgt. Dieses wird dadurch erreicht, daß die Statorbleche (2) der Feldspulen (33A) derart über den scheibenförmigen Rotor (7) geführt werden, daß das Magnetfeld parallel zur Rotorachse geschlossen wird. Durch diese Anordnung ergibt sich eine sehr einfache Konstruktion, die besonders kostengünstig ist. Eine bevorzugte Anwendung ist der Antrieb von Anzeigegeräten, insbesondere in einem Kraftfahrzeug.

FIG. 2

EP 0 697 762 A1

**Beschreibung**

Stand der Technik

Die Erfindung geht aus von einem zweiphasigen Permanentmagnet-Schrittmotor nach der Gattung des Hauptanspruchs. Es sind schon vielfältigste Schrittmotoren insbesondere auch zum Antrieb von Zeigerinstrumenten bekannt. Speziell für Anwendungen in einem Kraftfahrzeug müssen die Schrittmotoren hohe Anforderungen bezüglich des Gleichlaufs und des geräuscharmen Laufes bei ausreichender Auflösung und Winkelgeschwindigkeit erfüllen. Dieses führt beispielsweise zu Motorkonstruktionen mit hohen Polpaarzahlen und engen Luftspalttoleranzen. Die Fertigung derartiger Motoren ist jedoch kostenintensiv. Andererseits benötigen Motoren mit kleinen Polpaarzahlen hohe Getriebeübersetzungen, die insbesondere aus Geräuschgründen nicht akzeptabel sind.

Vorteile der Erfindung

Der erfindungsgemäße zweiphasige Permanentmagnet-Schrittmotor hat demgegenüber den Vorteil, daß durch die zur Rotorachse vorwiegend parallele Magnetisierung des Rotors eine sehr einfache Konstruktion des Motors möglich ist. Die axiale Feldrichtung im Rotor erlaubt einen relativ großen Luftspaltquerschnitt, der einen relativ großen magnetischen Fluß ergibt. Ein weiterer Vorteil ergibt sich aus der sehr einfachen Rotorgeometrie, die beispielsweise samt einem Antriebsritzel einteilig aus kunststoffgebundenem hartmagnetischem Material gefertigt werden kann. Durch den einfachen Aufbau können die Feldwicklungen vorteilhaft separat oder parallel gewickelt werden.

Durch die in den abhängigen Ansprüchen aufgeführten Maßnahmen sind vorteilhafte Weiterbildungen und Verbesserungen des im Hauptanspruch angegebenen Schrittmotors möglich. Vorteilhaft ist, daß die Begrenzung der Polpaarzahl eine besonders kostengünstige Lösung der Konstruktion darstellt.

Vorteilhaft ist weiter, daß durch die radiale Anordnung der Spulen zur Rotorachse eine einfache Montage erfolgen kann. Insbesondere wird der Magnetfluß über die u-förmigen Schenkel der Statorbleche zum Rotor geführt und schließt mit dem Rotor den Magnetkreis. Dieses führt zu relativ einfachen Arbeitsschritten, bei denen die Fertigungstoleranz unkritisch ist.

Durch den Abstandhalter werden vorteilhaft die Statorbleche derart fixiert, daß ein vorgegebener Luftspalt zum Rotor einstellbar ist.

Besonders vorteilhaft ist, daß der Rotor bei Verwendung von magnetisiertem Kunststoff im Spritzgießverfahren herstellbar ist. Dadurch kann gleich das Antriebsritzel im gleichen Arbeitsgang kostengünstig hergestellt werden.

In Verbindung mit einem Getriebe kann eine sehr hohe Auflösung erreicht werden, insbesondere dann, wenn der Schrittmotor mit einer Mikroschrittsteuerung angesteuert wird.

Eine bevorzugte Anwendung des Schrittmotors ergibt sich bei Anzeigegeräten, die insbesondere im Cockpit eines Kraftfahrzeugs verwendet werden.

Zeichnung

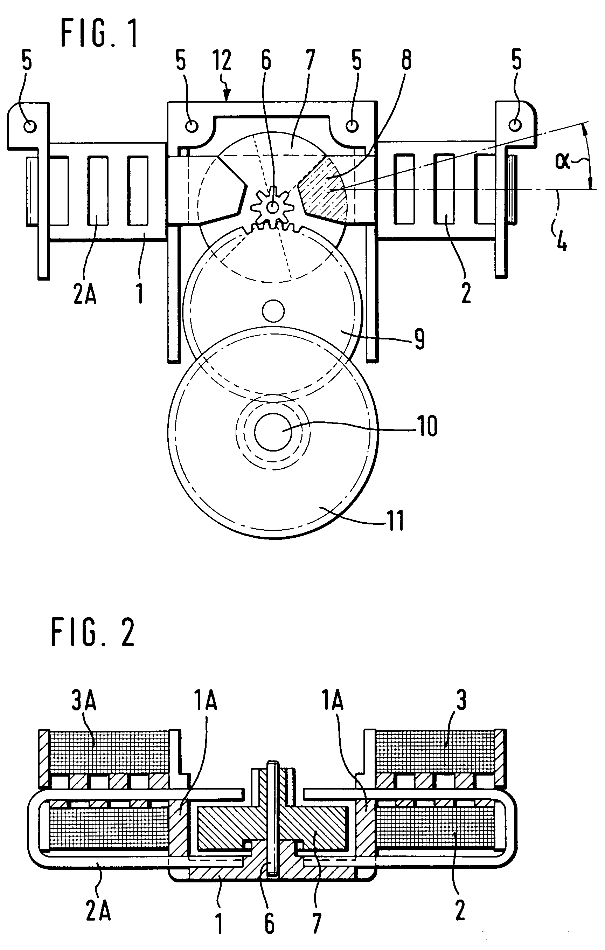

Ein Ausführungsbeispiel der Erfindung ist in der Zeichnung dargestellt und in der nachfolgenden Beschreibung näher erläutert. Es zeigen Figur 1 ein erstes Ausführungsbeispiel in Draufsicht und Figur 2 einen Querschnitt durch das Ausführungsbeispiel.

Beschreibung des Ausführungsbeispiels

Figur 1 zeigt ein Ausführungsbeispiel der Erfindung in Draufsicht. Dargestellt ist ein zweiphasiger Permanentmagnet-Schrittmotor mit einem Spulenpaar als Feldspulen und einem magnetisierten Rotor. Der Schrittmotor hat einen Spulenkörper 12 mit zwei gegenüberliegenden Kammern zur Aufnahme der Feldwicklungen 3, 3A. Die Spulenkörper 12 sind vorzugsweise einteilig und gleichartig aufgebaut, so daß beide Spulen entweder nacheinander oder auch gleichzeitig gewickelt werden können. Die Spulenkörper 12 haben entsprechende Anschlußflächen, auf denen Anschlußstifte 5 für die Kontaktierung der Spulenenden bzw. mit denen der Schrittmotor auf einer nicht dargestellten Leiterplatte eingelötet werden kann. Zwischen den Spulenträgern 12 ist ein scheibenförmiger Rotor 7 mit seiner Rotorachse 6 angeordnet, die in einem Gehäuse 6 gelagert ist und das ebenfalls die Spulenträger 12 aufnimmt. Vorzugsweise ist der Schrittmotor mit einem Reduziergetriebe mit Getrieberädern 9, 11 verbunden, wobei das Getrieberad 11 die Abtriebswelle 12 aufnimmt, die beispielsweise als Träger für einen Zeiger eines Anzeigegerätes genutzt werden kann. Durch das Getriebe wird eine erheblich größere Auflösung des Drehwinkels für den Schrittmotor erreicht. Ergänzend wird noch hinzugefügt, daß der Schrittmotor beispielsweise eine nicht dargestellte Rückzugfeder hat, die einerseits das Getriebespiel und damit Laufgeräusche verringert und andererseits eine Rückstellung des Zeigers bewirken kann.

Der Rotor 7 ist als Scheibenrotor ausgebildet und wird vorteilhaft samt einem Antriebsritzel für das Reduziergetriebe vorzugsweise einteilig aus kunststoffgebundenem hartmagnetischem Material gespritzt.

Figur 2 zeigt den erfindungsgemäßen Schrittmotor im Querschnitt, so daß die Anordnung der Feldspulen 3, 3A sowie der Statorbleche 2, 2A zum Rotor 7 erkennbar ist. Die Statorbleche 2, 2A sind u-förmig gebogen, wobei zur Montage jeweils ein Schenkel des Stators 2, 2A durch die Mittelachse der Feldspule 3, 3A geführt wird. Die beiden Schenkel der u-förmigen Statorbleche 2, 2A werden derart über den Rotor 7 geführt, daß sie mit den vorwiegend parallel zur Rotorachse 6 magnetisierten Rotorsegmenten zur Deckung kommen. Um einen gewissen Luftspalt zwischen den Statorblechen 2, 2A und dem Rotor 7 mit vorgegebener Toleranz einzuhalten, ist zwischen den Schenkeln eines Stators 2, 2A jeweils ein Abstandshalter 1A vorgesehen.

Der Figur 1 ist noch entnehmbar, daß die Stator-Wirkflächen 8 zur Mittelachse der Spulenträger 12 versetzt angeordnet sind. Sie bilden gegenüber der Achse der Spulenträger 12 einen Winkel α. Für diese Anordnung wird der notwendige Phasenversatz erreicht. Der Winkel α errechnet sich nach der Formel

$$\alpha = 45°/m,$$

wobei m die Polpaarzahl des Rotors 7 ist.

In weiterer Ausgestaltung der Erfindung ist vorgesehen, die Anzahl der Polpaare des Rotors 7 zwischen zwei und sechs zu wählen. Eine größere Polpaarzahl ist zwar möglich, erhöht jedoch die Fertigungskosten. Beispielsweise kann der Stator mit den Wirkflächen 8 so ausgebildet sein, daß die Wirkflächen über die entsprechenden Pole des Rotors 7 geführt sind. Eine höhere Polpaarzahl gibt grundsätzlich eine höhere Winkelauflösung, so daß unter Umständen auf ein Reduziergetriebe verzichtet werden kann.

Die Ansteuerung des Schrittmotors kann mit bekannten Ansteuerverfahren mit Mikroschritten erfolgen, so daß sich dadurch eine Auflösung für den Drehwinkel ergibt, der ohne Getriebe im Winkel-Grad-Bereich und mit Getriebe weit unterhalb eines Grads beträgt.

## Patentansprüche

1. Zweiphasiger Permanentmagnet-Schrittmotor mit einem Gehäuse, in dem wenigstens zwei Feldspulen als Stator angeordnet sind, die über Statorbleche das Magnetfeld zum Rotor leiten, und mit einem scheibenförmigen Permanentmagneten als Rotor, dadurch gekennzeichnet, daß die wenigstens zwei Feldspulen (3, 3A) mit den Statorblechen (2, 2A) derart gegenüberliegend angeordnet sind, daß die Statorbleche (2, 2A) im Rotor (7) eine zur Rotorachse (6) vorwiegend parallele Magnetisierung bewirken.

2. Schrittmotor nach Anspruch 1, dadurch gekennzeichnet, daß die Anzahl der Polpaare des Rotors (7) höchstens sechs ist.

3. Schrittmotor nach Anspruch 1 oder 2, dadurch gekennzeichnet, daß die Wickelachsen der Feldspulen (3, 3A) in etwa radial zur Rotorachse (6) liegen.

4. Schrittmotor nach einem der vorhergehenden Ansprüche, dadurch gekennzeichnet, daß die Wickelachsen der Feldspulen (3, 3A) in einer Flucht liegen.

5. Schrittmotor nach einem der vorhergehenden Ansprüche, dadurch gekennzeichnet, daß die Statorbleche (2, 2A) u-förmig gebogen sind, wobei ein Schenkel durch die Mittelachse einer Feldspule (3, 3A) geführt ist, und wobei beide Schenkel eines Stators (2, 2A) derart um den scheibenförmigen Rotor (7) angeordnet ist, daß sich zwischen den u-förmigen Schenkeln und den beiden parallelen Flächen des Rotors (7) jeweils ein Luftspalt bildet.

6. Schrittmotor nach einem der vorhergehenden Ansprüche, dadurch gekennzeichnet, daß die Statorbleche (2, 2A) mit ihren Stator-Wirkflächen (8) derart ausgebildet sind, daß die Stator-Wirkflächen (8) gegenüber der Symmetrieachsen der Feldspulen (3, 3A) einen vorgegebenen Winkel (α) bilden.

7. Schrittmotor nach einem der vorhergehenden Ansprüche, dadurch gekennzeichnet, daß zwischen den Schenkeln der Statorbleche (2, 2A) ein Abstandshalter (1A) mit einer vorgegebenen Länge angeordnet ist.

8. Schrittmotor nach einem der vorhergehenden Ansprüche, dadurch gekennzeichnet, daß der Rotor (7) vorzugsweise mit einem Abtriebsritzel aus einem kunststoffgebundenen Magnetmaterial hergestellt ist.

9. Schrittmotor nach Anspruch 8, dadurch gekennzeichnet, daß der Schrittmotor mit einem Reduziergetriebe (9, 11) verbunden ist.

10. Schrittmotor nach einem der vorhergehenden Ansprüche, dadurch gekennzeichnet, daß der Schrittmotor zum Antrieb eines Zeigerinstrumentes, vorzugsweise in einem Kraftfahrzeug verwendet wird.

FIG. 1

FIG. 2

| | Europäisches Patentamt | **EUROPÄISCHER RECHERCHENBERICHT** | Nummer der Anmeldung |
|---|---|---|---|
| | | | EP 95 11 1368 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB-A-2 062 367 (PORTESCAP) 20.Mai 1981 | 1,3,5,7,10 | H02K37/12 H02K37/16 |
| Y | * Seite 2, Zeile 119 - Seite 3, Zeile 11; Abbildungen 5,6 * | 4 | |
| | --- | | |
| Y | WO-A-94 05073 (FISHER & PAYKEL LIMITED) 3.März 1994 * Seite 4, Zeile 30 * * Seite 7, Zeile 6 - Zeile 12; Abbildungen 9,11 * | 4 | |
| | --- | | |
| X | WO-A-82 02291 (PORTESCAP) 8.Juli 1982 | 1,6 | |
| Y | * Abbildungen 16,17 * | 8,9 | |
| | --- | | |
| Y | PATENT ABSTRACTS OF JAPAN vol. 5 no. 133 (E-71) [805] ,25.August 1981 & JP-A-56 068254 (SEIKOUSHIYA K.K.) 8.Juni 1991, * Zusammenfassung * | 8,9 | |
| | --- | | **RECHERCHIERTE SACHGEBIETE (Int.Cl.6)** |
| X | US-A-3 989 967 (A.KIKUYAMA & AL.) 2.November 1976 * Spalte 2, Zeile 4 - Zeile 16; Abbildungen 2A-2B * | 1,2 | H02K |
| | --- | | |
| X | EP-A-0 589 342 (ETA SA FABRIQUES D'EBAUCHES) 30.März 1994 * Abbildungen 1,5 * | 1,5-7,10 | |
| | --- | | |
| X | WO-A-85 00704 (M.GROSJEAN) 14.Februar 1985 * Seite 1, Zeile 1 - Zeile 19 * | 1 | |
| | ----- | | |

Der vorliegende Recherchenbericht wurde für alle Patentansprüche erstellt

| Recherchenort | Abschlußdatum der Recherche | Prüfer |
|---|---|---|
| BERLIN | 3.November 1995 | Leouffre, M |